# EUROPEAN PATENT SPECIFICATION

(11) **EP 2 431 109 B1**
(45) Date of publication and mention of the grant of the patent: **23.01.2013**
(21) Application number: 11179693.4
(22) Date of filing: 01.09.2011
(51) Int. Cl.: B21K 1/46, B21K 1/56, F16B 39/282, F16B 35/06

(54) **Method for manufacturing fastening screw and fastening screw**
Verfahren zur Herstellung einer Befestigungsschraube und Befestigungsschraube
Procédé de fabrication de vis de fixation et vis de fixation

(30) Priority: 21.09.2010 JP 2010210532
(43) Date of publication of application: 21.03.2012
(73) Proprietor: Union Seimitsu Co., Ltd., Aiko-Gun, Kanagawa 243-0303 (JP); Sanohatsu Co., Ltd., Asaka-Shi Saitama 351-0014 (JP)
(72) Inventor: Tashima, Tadashi, Aikawa-Machi, Kanagawa 243-0303 (JP); Nishimura, Toshiyuki, Asaka-Shi, Saitama 351-0014 (JP)
(74) Representative: Schwerbrock, Florian

(56) References cited:
- GB-A- 423 340
- JP-A- 2007 321 930
- US-A- 2 543 705
- US-A- 2 716 759
- US-A- 2 895 368

## Description

### BACKGROUND OF INVENTION

### Field of the Invention

The present invention relates to a method for manufacturing a fastening screw which fastens, for example, a part to a workpiece with a predetermined fastening force, and to a fastening screw.

### Brief Description of the Prior Art

In order to achieve the lightweight, slimness and compactness of electronic devices, such as mobile phones, personal computers and portable music players, as well as automobile parts that become more popular in recent years, a structure fixing a part on a workpiece with comparatively thin thickness has been employed. In such a structure for fixing the part, a fastening screw is mainly adopted to fix the part.

In the fastening screw used in the structure for fixing the part, a cup-like collar integral with a head is provided with a plurality of protruding pieces extended along the periphery of the collar, inclined toward a loosening direction and protruded from the bearing surface, with a loosening direction end face being approximately vertical to the bearing surface, and these projecting pieces are formed along the periphery of the bearing surface with one spaced from another by a constant interval (reference 1).

In addition, a fastening screw is so configured that a recess is formed on a bearing surface of a head and the screw can be screwed without being tilted with respect to a workpiece having thin thickness. During the screwing operation, crushing of female threads or deformation of the lower hole would not occur. (reference 2)

Reference 3 discloses a method for manufacturing a fastening screw in two upsetting steps. A depression in the head is formed within a cavity of a first die, and a recess on the head is formed within a cavity of a second die.

[reference 1] Japanese Patent Publication No. 9-14248

[reference 2] Japanese Patent Publication No. 2007-321930

[reference 3] US Patent No 2,716,759.

### Summary of the invention

In the fastening screw in the reference 1, upon fastening, a plurality of protruding pieces formed and spaced from one another by a constant interval along the periphery of the bearing surface bite the workpiece, or the workpiece is deformed so that a predetermined fastening force can not be obtained.

In the fastening screw of reference 2, by forming a depression on the bearing surface of the head, even though the part can be fixed to the workpiece by a proper fastening force, the screw comes loose easily in the condition that the part is not certainly contacted with the periphery of the head when the bearing surface of the head of the screw seats on the part, and as time goes on, problems such as looseness of the screw, offset of the fixed part with respect to the workpiece would occur..

In view of the above fact, an object of the present invention is to provide a method for manufacturing a fastening screw capable of reducing manufacturing steps of the fastening screw, and to provide a fastening screw capable of increasing the fastening force.

In order to solve the above problems and to achieve the above objects, the present invention is configured as below.

The invention recited in claim 1 is a method for manufacturing a fastening screw, which comprises:
a preliminary upsetting step for forging a front end of a blank wire and forming a head having a depression in a condition, where a curve portion remains in an outer periphery to be formed into a bearing surface of the fastening screw, by means of a die having a protrusion protruding from a flat end face and a first punch having a cup-shaped cavity, the front end of the blank wire protruding from the protrusion of the die, wherein the diameter of the protrusion of the die is narrower than the diameter of the cup-shaped cavity of the first punch;
a finish upsetting step for forging the head and forming a recess on the head so that the depression of the head is not interfered with the recess of the head by the die and a second punch having a protrusion for forming the recess on the head;
a thread forming step for processing a shank extending from the head and forming threads on the shank.

The invention recited in claim 2 is the method of claim 1, wherein a front section of the preliminary upsetting step includes a blank forming step for cutting the blank wire and obtaining the blank wire having a predetermined size.

The invention recited in claim 3 is the method of claim 1, wherein a front section of the preliminary upsetting step includes a blank forming step for extruding the blank wire from a thick rod or a thick material and obtaining the blank wire having a predetermined size.

The invention recited in claim 4 is a fastening screw comprising a depression on a bearing surface of a head in a condition, where a curve portion of an outer periphery remains, the depression being so configured that a recess of the head is not interfered with the depression wherein a seating surface of the head is formed of the outer periphery of the head.

The invention recited in claim 5 is the fastening screw of claim 4, wherein the depression has an inclined surface facing a bottom of the recess.

In the invention recited in claim 1, in the preliminary upsetting step, since a front end of a blank wire is forged and the head having a depression is formed in a condition, where a curve portion remains on an outer periphery to be formed into a bearing surface of the fastening screw, by the die and the first punch, in the finish upsetting step, only the head is forged and a recess is so configured that the depression is not interfered with the recess by the die and a second punch, and hence the manufacturing steps can be reduced.

In the invention recited in claim 2, since a front section of the preliminary upsetting step includes a blank forming step for cutting the blank wire and obtaining the blank wire having a predetermined size, the blank wire for a fastening screw can be obtained easily.

In the invention of claim 3, since a front section of the preliminary upsetting step includes a blank forming step for extruding the blank wire from a thick rod or a thick material and obtaining the blank wire having a predetermined size, the blank wire for a fastening screw can be obtained easily.

In the invention of claim 4, since a depression which is so configured that a recess is not interfered with the depression is provided on a bearing surface of a head in a condition where a curve portion of an outer periphery remains and a seating surface of the head is formed of the outer periphery of the head, the outer periphery of the curve portion is in contact with a fastening surface upon fastening. Accordingly, the fastening face can be increased without the fastening surface being bitten and retained on.

In the invention of claim 5, since the depression has an inclined surface facing a bottom of the recess, a seating surface can be formed without degrading the strength of the head.

### BRIEF DESCRIPTION OF THE DRAWINGS

Figure 1 is a view illustrating the method for manufacturing a fastening screw.
Figure 2 is a view illustrating the preliminary upsetting step.
Figure 3 is a front view of the fastening screw.
Figure 4 is a partial sectional enlarged view of the fastening screw.
Figure 5 is a sectional enlarged view of the main parts showing a screwed state.
Figure 6 is a partial sectional enlarged view of another embodiment of the fastening screw.
Figure 7 is a partial sectional enlarged view of still another embodiment of the fastening screw.
Figure 8 is a graph showing the torque of the fastening screw of the embodiment versus time.
Figure 9 is a graph showing the torque of the conventional fastening screw versus time.

### DETAILED DESCRIPTION OF PREFERRED EMBODIMENTS

The embodiment of the method for manufacturing a fastening screw and the screw according to the present invention will be described below. The embodiments of the present invention are provided for showing the most preferred ones of the invention, but it is noted that the invention is not limited to these preferred embodiments.

### [the method for manufacturing a fastening screw]

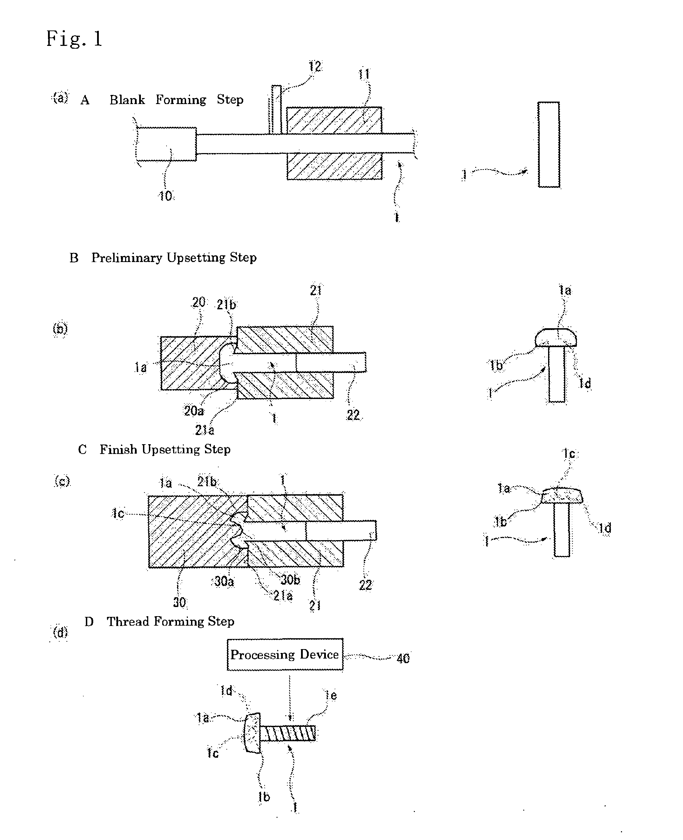

The method for manufacturing a fastening screw of this embodiment will be described with reference to Figure 1. The method for manufacturing a fastening screw of this embodiment comprises a blank forming step A, a preliminary upsetting step B, a finish upsetting step C, and a thread forming step D.

The forming process A is composed of a step for cutting a blank wire and obtaining the blank wire having a predetermined size or a step for extruding a blank wire from a thick rod or thick material and obtaining the blank wire having a predetermined size. In the step for cutting a blank wire and obtaining the blank wire having a predetermined size, after the blank wire is fed into a forging machine and straightened through correction rollers, a front end of the blank wire 1 is abutted on a stopper 10 and is cut to one having a predetermined size by a cutting piece 11 and a cutting blade 12. In the step for extruding a blank wire from a thick rod or thick material and obtaining the blank wire having a predetermined size, since the head is unable to be formed if the diameter of the head is larger than the screw diameter (shank diameter), a thin portion to be formed into the screw from the thick rod or thick material is separately formed by extrusion, and the blank wire 1 having a predetermined size is obtained.

In the preliminary upsetting process B, a first punch 20 and a die 21, and preliminary upsetting for forming the head of the fastening screw is performed. The first punch 20 has a cup-shaped cavity 20a while the die 21 has a protrusion 21b protruding from a flat end face 21a. By means of the die 21 having the protrusion 21b protruding from the flat end face 21a and the first punch 20 having the cup-shaped cavity 20a, the front end of the blank wire 1 protruding from the protrusion 21b of the die 21 is forged and a head 1a having a depression 1d is formed in a condition that a curve portion 1b remains on an outer periphery to be formed into a bearing surface of the fastening screw.

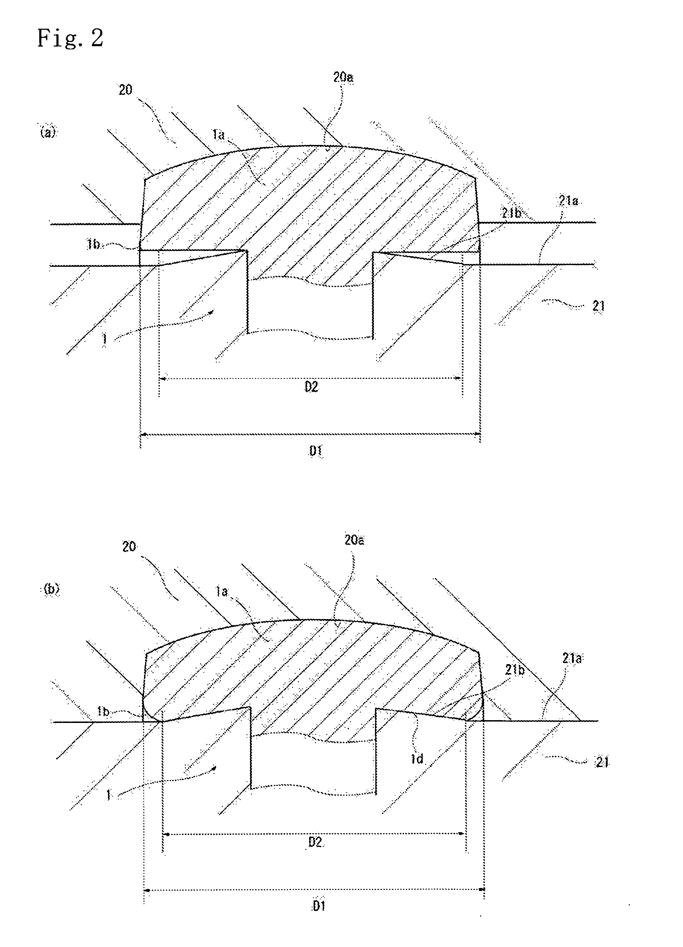

The front end of the blank wire 1 is forged by use of the first punch 20 and the die 21. As shown in Figure 2, the diameter D2 of the rising part of the protrusion 21b of the die 21 is formed to be narrower than the diameter D1 of the cup-shaped cavity 20a of the first punch 20. When the front end of the blank wire 1 protruding from the protrusion 21b of the die 21 is forged by the first punch having the cup-shaped cavity 20a, the front end of the blank wire 1 is pressed by the cup-shaped cavity 20a, and the front end is formed into the shape of the cup-shaped cavity 20a. On the other hand, the depression 1d is formed by the protrusion 21b of the die 21. At this time, the front end is pressed by the protrusion 21b of the die 21 while the diameter D2 of the rising part of the protrusion 21b of the die 21 is formed to be narrower than the diameter D1 of the cup-shaped cavity 20a of the first punch 20, and hence the front end is depressed and a curve portion 1b is formed on an outer periphery, which is formed into a bearing surface of the fastening screw, by forming this depression 1d.

In the finish upsetting step C, a second punch 30 and the die 21 are used, and finish upsetting for forming the head 1a of the fastening screw is performed. A protrusion 30b of the second punch 30 for forming a recess 1c on the head 1a is formed with a depression 30a, the die 21 used in the preliminary upsetting step B is still used, and the head 1a is forged by the second punch 30 and the die 21 so as to form the recess 1c which would not interfere with the depression 1d of the head 1a.

In the thread forming step D, a processing device 40 is used, and threads are formed on a shank 1e extending from the head 1a. A rolling device is preferably used as the processing device 40 for forming the threads by rolling.

As such, in the preliminary upsetting step B of the embodiment of the method for manufacturing a fastening screw, since the front end of the blank wire 1 is forged by the die 21 and the first punch 20 and the head 1a having a depression 1d is formed in a condition where a curve portion 1b remains in the outer periphery to be formed into the bearing surface of the fastening screw, in the finish upsetting step C, the head 1a is merely forged by the die 21 and the second punch 30 so as to form a recess 1c which would not interfere with the depression 1d of the head 1a, and the manufacturing steps can be reduced.

Furthermore, since the front section of the preliminary upsetting step B comprises a blank forming step A which is a step for cutting the blank wire and obtaining the blank wire having a predetermined size or a step for extruding the blank wire from a thick rod or a thick material and obtaining the blank wire having a predetermined size, the blank wire 1 for the fastening screw can be obtained easily.

### [fastening screw]

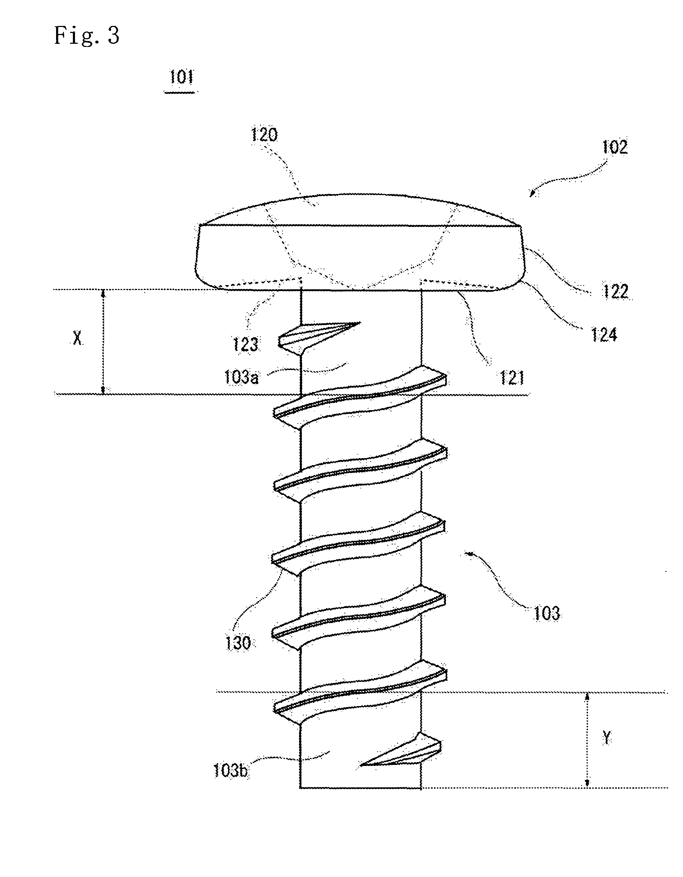

The fastening screw of this embodiment will be described with reference to Figures 3 to 9. The fastening screw 101 of this embodiment is formed by the method for manufacturing fastening screw described in the embodiment illustrated in Figures 1 and 2, but it is not limited to this method for manufacturing fastening screw.

The fastening screw 101 comprises a head 102 and a shank 103 integrally formed therewith, and a recess 120 for transmitting a screw driving force from a driver bit (not shown) is formed on the head 102. The recess 120 has a cross shape but is not limited thereto.

On the shank 103 integrally formed with the head 102, two screw threads 130 are formed from the vicinity of the bearing surface 121 of the head 102 to the front end of the shank 103, the shank 103 has a constant sectional shape from the head side to the front end portion, but the shank can also tapered gradually and slightly. Further, two screw threads 130 are formed on the shank 103, but the number of screw thread 130 not limited to two. The screw threads may be three or more.

The two screw threads 130 formed on the shank 103 have a constant pitch, and the length X of an imperfect portion 103a at the head side is formed to be shorter than the length Y of a screw guide portion 103b at the front end side.

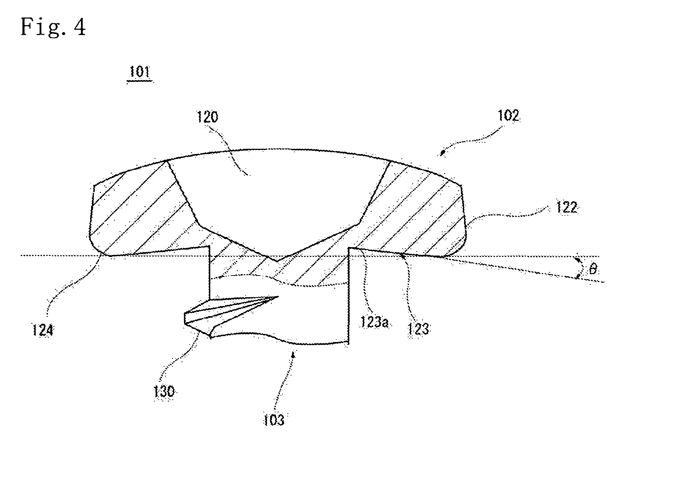

As shown in Figure 4, the fastening screw 101 is formed with a conical depression 123 on the bearing surface 121 of the head 102. The depression 123 has an inclined surface 123a inclining from an outer periphery 122 of the head 102 to the center at an angle θ in the direction to the bottom of the recess 120 of the head 102.

As such, the fastening screw 101 comprises the head 102 formed with the recess 120, the depression 123 which would not interfere with the recess 120 is formed on the bearing surface 121 of the head 102 in a condition where a curve portion of the outer periphery 122 remains, and a seating surface 124 of the head 102 is formed by the outer periphery 122 of the curve portion. Since the depression 123 is formed by the inclined surface 123a facing the bottom of the recess 120, the seating surface 124 can be formed without degrading the strength of the head 102.

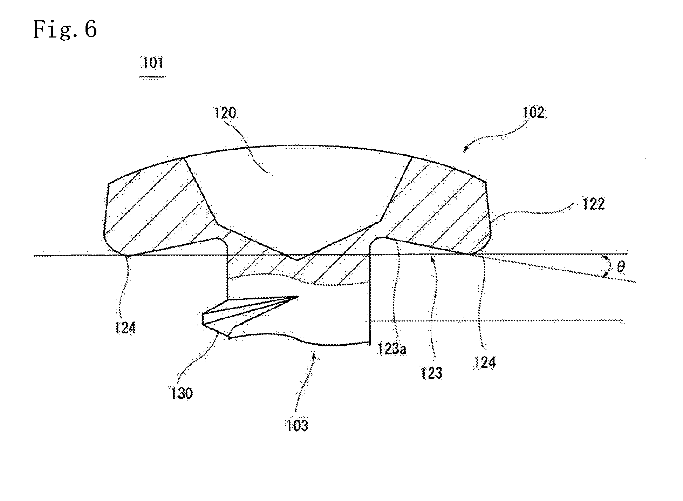

While the depression 123 is formed by the inclined surface 123a facing the bottom of the recess 120 and is formed as a conical shape in this embodiment, as shown in Figure 6, the depression 123 can also be formed as a conical shape with an angle θ of the inclined surface 123a of the depression 123 being enlarged. Moreover, the depression 123 can also be made as a truncated cone shape with its top portion being flattened.

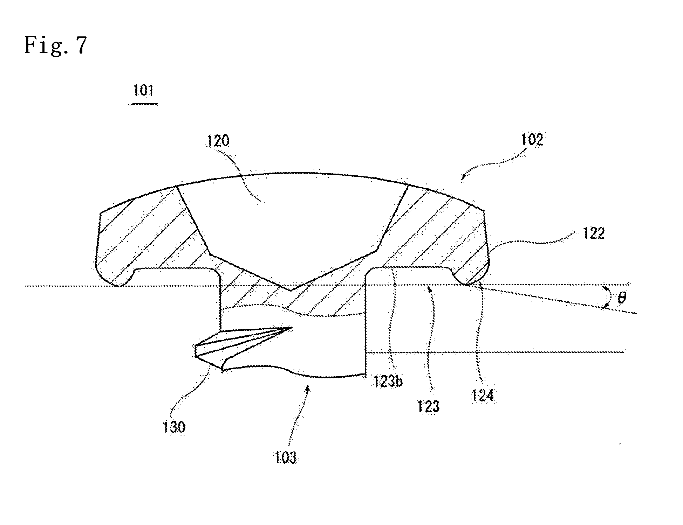

Further, as shown in Figure 7, the depression 123 is formed as a dish shape having a lower surface 123b, and as a result of the depression 123, the seating surface 124 is formed by the outer periphery 122 of the curve portion.

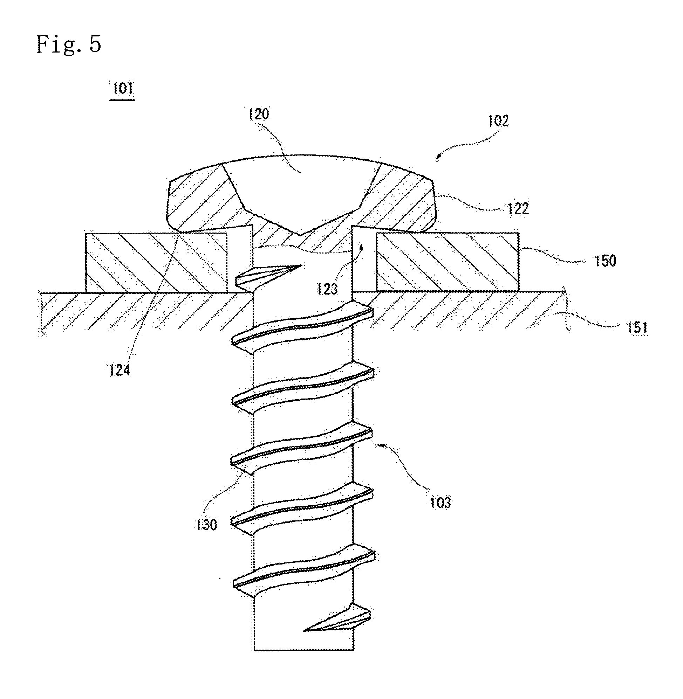

Next, the fastening operation of the fastening screw 101 will be described with reference to Figure 5. When the fastening screw 101 is screwed and the bearing surface 121 of the head 102 is seated, the seating surface 124 of the outer periphery 122 is firstly seated, and by the action of the seating surface 124 formed on the outer periphery 122 of the head 102, the predetermined axial force after the screwing can continue to act on the fastening screw 101.

In other words, since the depression 123 is formed on the bearing surface 121 of the head 102 in a condition where the outer periphery 122 remains and the seating surface 124 is formed on the outer periphery 122, the seating surface 124 is abutted on a fastening surface of the part 150 and smoothly and slidably rotated without biting the part 150 during fastening, and the part 150 can be fixed on the workpiece 151 by a proper fastening force in a short time. Furthermore, the seating surface 124 is surly contacted with the part 150 when the seating surface 124 is seated on the part 150, and the loosening of the screw is difficult to occur since a pressing area for pressing the part 150 by the seating surface 124 becomes wide.

Further, since the length X of the imperfect portion 103a at the head side is made to be shorter than the length Y of the screw guide portion 103b at the front end side, a predetermined fastening torque can be easily obtained on the head side of the shank 103 and the loosening is difficult to occur.

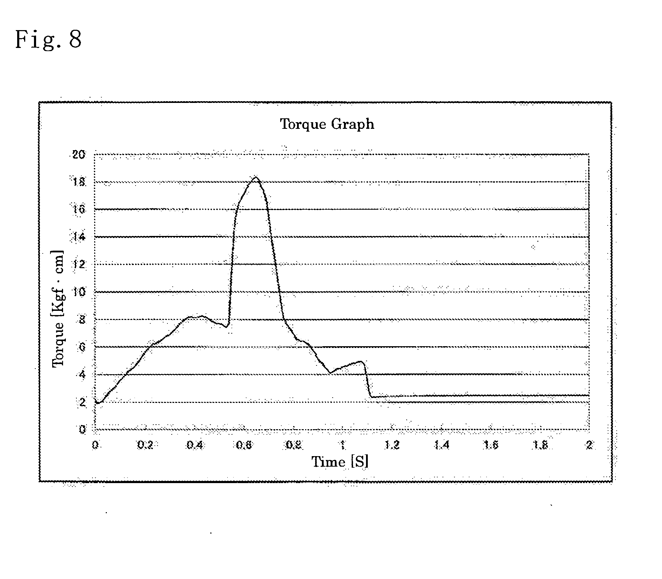

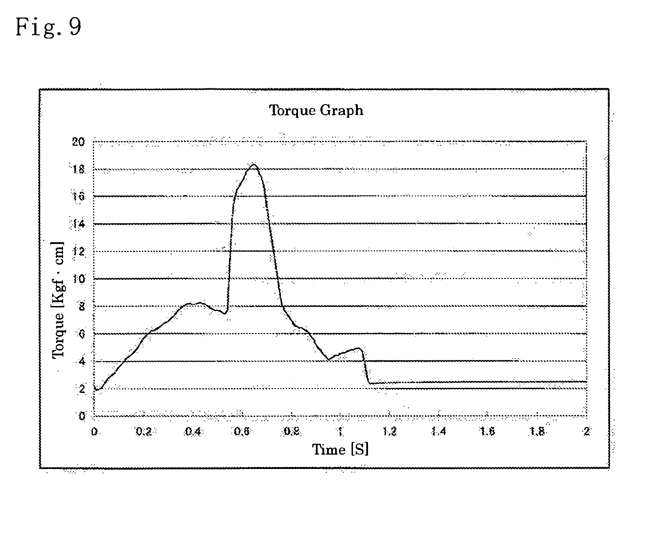

The measurement of breakdown torques of the fastening screw according to the embodiment of the present invention and the conventional fastening screw are respectively shown in Figures 8 and 9. Figure 8 is a graph showing the torque versus time of the fastening screw according to the embodiment of the present invention, while Figure 9 is a graph showing the torque versus time of the conventional fastening screw. Regarding the screw fastening test machine, delvo DLV815-EKN made by a friend company is used, and is set at 450 rpm.

In the measurement of breakdown torques, the fastening screw of the embodiment is compared with the conventional fastening screw, the fastening breakdown torque of the fastening screw of the embodiment has a maximum value of 20.00 Kgf • cm while the fastening breakdown torque of the conventional fastening screw has a maximum value of 18.34 Kgf • cm. Hence, the fastening force can be increased.

The present invention is adapted to the method for manufacturing a fastening screw which fastens a part to a workpiece by a predetermined fastening force, and the fastening screw, the time for fastening the screw can be reduced, a predetermined fastening force can be obtained, and the loosening of screw can be suppressed.

## Claims

1. A method for manufacturing a fastening screw (101), **characterized in that** the method comprises:
a preliminary upsetting step (B) for forging a front end of a blank wire (1) and forming a head (1a) having a depression (1d) in a condition, where a curve portion (1b) remains in an outer periphery (122) to be formed as a bearing surface (124) of the fastening screw (101), by means of a die (21) having a protrusion (21b) protruding from a flat end face (21a) and a first punch (20) having a cup-shaped cavity (20a), the front end of the blank wire (1) protruding from the protrusion (21b) of the die (21), wherein the diameter (D2) of the protrusion (21b) of the die (21) is narrower than the diameter (D1) of the cup-shaped cavity (20a) of the first punch (20);
a finish upsetting step (C) for forging the head (1a) and forming a recess (1c) on the head (1a) so that the depression (1d) of the head (1a) is not interfered with the recess (1c) of the head (1a) by the die (21) and a second punch (30) having a protrusion (30b) for forming the recess (1c) on the head (1a);
a thread forming step (D) for processing a shank (1e) extending from the head (1a) and forming threads on the shank (1e).

2. The method of claim 1, **characterized in that** a front section of the preliminary upsetting step (B) includes a blank forming step (A) for cutting the blank wire (1) and obtaining the blank wire (1) having a predetermined size.

3. The method of claim 1, **characterized in that** a front section of the preliminary upsetting step (B) includes a blank forming step for extruding the blank wire (1) from a thick rod or a thick material and obtaining the blank wire (1) having a predetermined size.

4. A fastening screw (101), **characterized in that** the fastening screw (101) comprises a depression (123) on a bearing surface (121) of a head (102) in a condition where a curve portion (1b) of an outer periphery (122) remains, the depression (123) being so configured that a recess (120) of the head (102) is not interfered with the depression (123), wherein a seating surface (124) of the head (102) is formed of the outer periphery (122) of the head (102).

5. The fastening screw (101) of claim 4, **characterized in that** the depression (123) has an inclined surface (123a) facing a bottom of the recess (120).

## Patentansprüche

1. Verfahren zur Herstellung einer Befestigungsschraube umfassend:
einen vorbereitenden Stauchschritt zum Schmieden eines vorderen Endes eines Drahtrohlings und Ausbildung eines Kopfes mit einer Mulde in einem Zustand, bei dem ein bogenförmiger Abschnitt in einer äußeren Peripherie zur Ausbildung einer Lagerfläche der Befestigungsschraube verbleibt, und zwar mittels einer Matrize mit einem vorstehenden Teil, das aus einer flachen Endfläche und einem ersten Stempel mit einer topfförmigen Eintiefung hervorsteht, wobei das vordere Ende von dem vorstehenden Teil der Matrize hervorsteht;
ein abschließender Stauchvorgang zum Schmieden des Kopfes und Ausbildung einer Vertiefung, derart, dass die Mulde des Kopfes die Vertiefung durch die Matrize nicht beeinträchtigt und ein zweiter Stempel ein vorstehendes Teil zur Ausbildung der Vertiefung im Kopf aufweist;
ein Gewinde herstellender Schritt zur Herstellung eines Schafts, der am Kopf beginnt und der ein Gewinde am Schaft bildet.

2. Verfahren nach Anspruch 1, wobei ein vorderer Bereich des vorbereitenden Stauchschritts einen Schritt zur Ausbildung eines Drahtrohlings zum Schneiden des Drahtrohlings umfasst und ein Drahtrohling einer vorherbestimmten Größe entsteht.

3. Verfahren nach Anspruch 1, wobei ein vorderer Bereich des vorbereitenden Stauchschritts einen Schritt zur Ausbildung eines Drahtrohlings umfasst, um den Drahtrohling aus einem dicken Stab oder einem dicken Material zu extrudieren, und ein Drahtrohling einer vorherbestimmten Größe entsteht.

4. Eine Befestigungsschraube mit einer Mulde in einer Lagerfläche eines Kopfes in einem Zustand, bei dem ein bogenförmiger Abschnitt einer äußeren Peripherie verbleibt, wobei die Mulde so ausgebildet ist, dass eine Vertiefung die Mulde nicht beeinträchtigt, wobei eine Sitzfläche des Kopfes aus der äußeren Peripherie des Kopfes gebildet wird.

5. Befestigungsschraube nach Anspruch 4, wobei die Mulde eine schräge Ebene gegenüber dem tiefsten Punkt der Vertiefung aufweist.

## Revendications

1. Une méthode de fabrication d'une vis de serrage, comprenant :
une étape de refoulement préliminaire pour le forgeage d'une extrémité avant d'un fil ébauche et le façonnage d'une tête présentant une dépression, dans un état où une partie courbe reste dans une périphérie extérieure à façonner en tant que surface d'appui de la vis de serrage, à l'aide d'une matrice présentant une saillie dépassant d'une face à extrémité plate et un premier poinçon présentant une cavité en forme de coupe, l'extrémité avant dépassant de la saillie de la matrice ;
une étape de refoulement de finition pour le forgeage de la tête et le façonnage d'un évidement, de sorte que la dépression de la tête ne vienne pas en interférence avec l'évidement par la matrice et un deuxième poinçon présentant une saillie pour le façonnage de l'évidement sur la tête ;
une étape de façonnage du filetage pour le traitement d'une tige dépassant de la tête et le façonnage de filets sur la tige.

2. La méthode selon revendication 1, où une section avant de l'étape de refoulement préliminaire comprend une étape de façonnage de l'ébauche pour la coupe du fil ébauche et l'obtention du fil ébauche ayant une taille prédéterminée.

3. La méthode selon revendication 1, où une section avant de l'étape de refoulement préliminaire comprend une étape de façonnage de l'ébauche pour l'extrusion du fil ébauche à partir d'une tige épaisse ou d'un matériau épais, et pour l'obtention du fil ébauche ayant une taille prédéterminée.

4. Une vis de serrage, comprenant une dépression sur une surface d'appui d'une tête, dans un état où une partie courbe d'une périphérie extérieure demeure, la dépression étant configurée de sorte qu'un évidement ne vienne pas en interférence avec la dépression, où une surface d'appui de la tête est constituée de la périphérie extérieure de la tête.

5. La vis de serrage selon revendication 4, où la dépression présente un plan incliné tourné vers un fond de l'évidement.
